# EUROPÄISCHE PATENTSCHRIFT

(11) **EP 1 053 275 B1**
(45) Veröffentlichungstag und Bekanntmachung des Hinweises auf die Patenterteilung: **09.01.2002**
(21) Anmeldenummer: 99932412.2
(22) Anmeldetag: 29.01.1999
(51) Int. Cl.: C08G 69/04, C08G 69/16, C08G 69/08

(54) **KONTINUIERLICHES VERFAHREN ZUR HERSTELLUNG VON POLYAMIDEN AUS AMINONITRILEN**
CONTINUOUS METHOD FOR PRODUCING POLYAMIDES FROM AMINONITRILES
PROCEDE EN CONTINU POUR LA PRODUCTION DE POLYAMIDES A PARTIR D'AMINONITRILES

(30) Priorität: 02.02.1998 DE 19804033
(43) Veröffentlichungstag der Anmeldung: 22.11.2000
(73) Patentinhaber: BASF AKTIENGESELLSCHAFT, 67056 Ludwigshafen (DE)
(72) Erfinder: Mohrschladt, Ralf, 68723 Schwetzingen (DE); Krauss, Dieter, 67269 Grünstadt (DE); Hildebrandt, Volker, 68169 Mannheim (DE)
(74) Vertreter: Isenbruck, Günter, Dr.
(86) Internationale Anmeldenummer: EP9900602
(87) Internationale Veröffentlichungsnummer: WO9938906

(56) Entgegenhaltungen:
- EP-A- 0 227 866
- EP-A- 0 479 306
- WO-A-98/08889
- US-A- 4 629 776

## Beschreibung

Die vorliegenden Erfindung betrifft ein kontinuierliches Verfahren zur Herstellung von Polyamiden aus Aminonitrilen und Wasser bei erhöhter Temperatur und erhöhtem Druck.

In der US 4,629,776 ist ein katalytisches Verfahren zur Herstellung von Polyamiden aus ω-Aminonitrilen wie ω-Aminocapronitril (ACN) beschrieben. ACN wird mit Wasser in Gegenwart einer katalytischen Menge einer oxidierten Schwefelverbindung als Katalysator umgesetzt. Beispielsweise wird Schwefelsäure als Katalysator eingesetzt.

In der US 4,568,736 ist ein ähnliches katalytisches Verfahren zur Herstellung von Polyamiden beschrieben. Als Katalysator wird hier eine sauerstoffhaltige Phosphorverbindung, Phosphorsäure oder eine Phosphonsäure eingesetzt.

Eine vollständige Abtrennung der Katalysatoren ist in beiden Verfahren praktisch nicht möglich. Das Vorliegen der Katalysatoren im Polymer kann den Aufbau hochmolekularer Polymere behindern und spätere Verarbeitungsschritte, etwa das Verspinnen erschweren. Zudem ist der Gehalt an flüchtigen Bestandteilen in den erhaltenen Polymeren hoch, so daß die Polyamide schwierig zu verarbeiten sind.

In der EP-A-0 479 306 ist die Herstellung von Polyamiden aus ω-Aminonitrilen beschrieben. Die ω-Aminonitrile werden dabei mit Wasser in Gegenwart einer sauerstoffhaltigen Phosphorverbindung als Katalysator umgesetzt. Im Verfahren werden nach Erreichen einer Reaktionstemperatur von 200 bis 260°C kontinuierlich Ammoniak und Wasser durch Entspannen entfernt, und es wird gleichzeitig kontinuierlich Wasser zugesetzt, wobei der Druck im Bereich von 14 bis 24 x 10⁶ Pa (14-24 bar) gewählt wird.

Die DE-A-43 39 648 betrifft ein Verfahren zur Herstellung von Caprolactam durch Umsetzung von Aminocarbonsäurenitrilen mit Wasser, wobei in flüssiger Phase unter Verwendung heterogener Katalysatoren gearbeitet wird. Als heterogene Katalysatoren können dabei saure, basische oder amphotere Oxide der Elemente der 2. 3. oder 4. Hauptgruppe des Periodensystems eingesetzt werden. Beispielsweise kann Titandioxid eingesetzt werden. Der Katalysator wird beispielsweise in Form von Strängen eingesetzt.

Eine kontinuierliche Verfahrensführung erfordert eine intensive Quervermischung innerhalb der eingesetzten Rohrreaktoren zum Ausgleich von Konzentrations- und Temperaturgradienten. Zudem soll eine möglichst geringe axiale Rückvermischung auftreten. Nur durch eine wirksame Unterdrückung der axialen Rückvermischung beziehungsweise der axialen Dispersion ist ein sogenanntes Pfropfenströmungsprofil zugänglich, das eine schmale Verweilzeitverteilung und eine definierte gleiche Verweilzeit für alle Volumenelemente im Rohrreaktor garantiert.

Aufgabe der vorliegenden Erfindung ist die Bereitstellung eines kontinuierlichen Verfahrens zur Herstellung von Polyamiden aus Aminonitrilen, bei dem in einem Rohrreaktor die Rückvermischung weitgehend verhindert und eine enge Verweilzeitverteilung erreicht wird. Zudem sollen verbesserte Umsetzungsbedingungen, eine niedrigere Temperatur und niedrigerer Druck zugänglich sein.

Die Aufgabe wird erfindungsgemäß gelöst durch Bereitstellung eines kontinuierlichen Verfahrens zur Herstellung eines Polyamids durch Umsetzung mindestens eines Aminonitrils mit Wasser, das die folgenden Stufen umfaßt:
(1) Umsetzung mindestens eines Aminonitrils mit Wasser im Molverhältnis 1:1 bis 1:10 bei einer Temperatur von 90 bis 400°C und einem Druck von 0,1 bis 15 x 10⁶ Pa in einem Strömungsrohr, das Füllkörper eines Brönsted-Säurekatalysators, ausgewählt aus Beta-Zeolith-, Schichtsilikat- oder Titandioxid-Füllkörpern, und metallische Füllkörper enthält, wobei die Füllkörper eines Brönsted-Säurekatalysators, ausgewählt aus Beta-Zeolith-, Schichtsilikat- oder Titandioxid-Füllkörpern, und die metallischen Füllkörper im Strömungsrohr alternierend geschichtet sind,
   wobei ein Umsetzungsgemisch erhalten wird,
(2) weitere Umsetzung des Umsetzungsgemischs bei einer Termperatur von 150 bis 400°C und einem Druck, der niedriger ist als der Druck in Stufe 1, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Versetzen der ersten flüssigen oder der ersten festen Phase oder des Gemischs aus erster flüssiger und erster fester Phase mit einer gasförmigen oder flüssigen Phase, die Wasser enthält, bei einer Temperatur von 150 bis 370°C, und einem Druck von 0,1 bis 30 x 10⁶ Pa, wobei ein Produktgemisch erhalten wird.

Vorzugsweise wird Stufe (3) in einem Strömungsrohr, durchgefüht, das Füllkörper eines Brönsted-Säurekatalysators, ausgewählt aus Beta- Zeolith-, Schichtsilikat- oder Titandioxid-Füllkörpern und metallische Füllkörper enthält, wobei die Füllkörper eines Brönsted-Säurekatalysators, ausgewählt aus Beta-Zeolith-, Schichtsilikat- oder Titandioxid-Füllkörpern, und die metallischen Füllkörper im Strömungsrohr alternierend geschichtet sind.

Dabei umfassen die vorstehenden Verfahren vorzugsweise zusätzlich folgende Stufe:
(4) Nachkondensation der ersten flüssigen oder der ersten festen Phase oder des Gemischs aus erster flüssiger und erster fester Phase bei einer Temperatur von 200 bis 350°C und einem Druck, der niedriger ist als der Druck der Stufe 3, wobei die Temperatur und der Druck so gewählt werden, daß eine zweite, Wasser und Ammoniak enthaltende Gasphase und eine zweite flüssige oder zweite feste Phase oder ein Gemisch aus zweiter flüssiger und zweiter fester Phase, die (das) jeweils das Polyamid enthält, erhalten werden.

Die Aufgabe wird zudem erfindungsgemäß gelöst durch ein kontinuierliches Verfahren zur Herstellung eines Polyamids durch Umsetzung mindestens eines Aminonitrils mit Wasser, das die folgenden Stufen umfaßt:
(1) Umsetzung mindestens eines Aminonitrils mit Wasser im Molverhältnis 1:1 bis 1:10 bei einer Temperatur von 90 bis 300°C und einem Druck von 0,1 bis 15 x 10⁶ Pa in einem Strömungsrohr, das Füllkörper eines Brönsted-Säurekatalysators, ausgewählt aus Beta-Zeolith-, Schichtsilikat- oder TitandioxidFüllkörpern und metallische Füllkörper enthält, wobei die Füllkörper eines Brönsted-Säurekatalysators, ausgewählt aus Beta-Zeolith-, Schichtsilikat- oder Titandioxid-Füllkörpern, und die metallischen Füllkörper im Strömungsrohr alternierend geschichtet sind,
   wobei ein Umsetzungsgemisch erhalten wird,
(2) weitere Umsetzung des Umsetzungsgemischs bei einer Temperatur von 150 bis 400°C und einem Druck, der niedriger ist als der Druck in Stufe 1, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(4) Nachkondensation der ersten flüssigen oder der ersten festen Phase oder des Gemischs aus erster flüssiger und erster fester Phase bei einer Temperatur von 200 bis 350°C und einem Druck, der niedriger ist als der Druck der Stufe 2, wobei die Temperatur und der Druck so gewählt werden, daß eine zweite, Wasser und Ammoniak enthaltende Gasphase und eine zweite flüssige oder zweite feste Phase oder ein Gemisch aus zweiter flüssiger und zweiter fester Phase, die (das) jeweils das Polyamid enthält, erhalten werden

Es wurde erfindungsgemäß gefunden, daß der Einsatz einer Kombination von Titandioxid-Füllkörpern und metallischen Füllkörpern in Strömungsrohren (auch als Rohrreaktoren bezeichnet) zu einer engen Verweilzeitverteilung der ' Reaktionsmischung im Rohr führt. Zusätzlich können die zur Umsetzung des Reaktionsgemisches erforderliche Reaktionstemperatur und der Reaktionsdruck in den Strömungsrohren abgesenkt werden. Das erfindungsgemäße Verfahren führt somit zu einer Verbesserung der Produkthomogenität und Produktqualität bei gleichzeitiger Verringerung des Energieeintrags in das Reaktionsgemisch.

Die prinzipielle Vorgehensweise des erfindungsgemäßen Verfahrens ist in der prioritätsälteren, nicht vorveröffentlichten DE-A-197 09 390 beschrieben.

In einer ersten Stufe wird ein Aminonitril im Strömungsrohr mit Wasser umgesetzt, teilweise hydrolytisch polymerisiert und in anschließenden Reaktionsstufen weiterverarbeitet. Das Gesamtverfahren umfaßt 3 oder 4 Verfahrensstufen. In den Stufen (1) und (3) können die erfindungsgemäß ausgerüsteten Strömungsrohre eingesetzt werden.

Als Aminonitril können im Gemisch prinzipiell alle Aminonitrile, d.h. Verbindungen, die sowohl mindestens eine Amino- als auch mindestens eine Nitrilgruppe aufweisen, eingesetzt werden. Unter diesen sind ω-Aminonitrile bevorzugt, wobei unter letzteren insbesondere ω-Aminoalkylnitrile mit 4 bis 12 C-Atomen, weiter bevorzugt 4 bis 9 C-Atomen im Alkylenrest, oder ein Aminoalkylarylnitril mit 8 bis 13 C-Atomen eingesetzt werden, wobei dort solche bevorzugt werden, die zwischen der aromatischen Einheit und der Amino- und Nitrilgruppe eine Alkylengruppe mit mindestens einem C-Atom aufweisen. Unter den Aminoalkylarylnitrilen sind insbesondere solche bevorzugt, die die Amino- und Nitrilgruppe in 1,4-Stellung zueinander aufweisen.

Als ω-Aminoalkylnitril setzt man weiter bevorzugt lineare ω-Aminoalkylnitrile ein, wobei der Alkylenrest (-CH₂-) vorzugsweise 4 bis 12 C-Atome, weiter bevorzugt von 4 bis 9 C-Atome enthält, wie 6-Amino-l-cyanopentan (6-Aminocapronitril), 7-Amino-1-cyanohexan, 8-Amino-1-cyanoheptan, 9-Amino-1-cyanooctan, 10-Amino-1-cyanononan, besonders bevorzugt 6-Aminocapronitril.

6-Aminocapronitril erhält man üblicherweise durch Hydrierung von Adipodinitril nach bekannten Verfahren, beispielsweise beschrieben in DE-A 836,938, DE-A 848,654 oder US 5 151 543.

Selbstverständlich können auch Gemische mehrer Aminonitrile oder Gemische eines Aminonitrils mit weiteren Comonomeren, wie Caprolactam oder das untenstehend näher definierte Gemisch eingesetzt werden.

In einer besonderen Ausführungsform, insbesondere wenn man Copolyamide oder verzweigte oder kettenverlängerte Polyamide herstellen möchte, setzt man anstelle von reinem 6-Aminocapronitril folgendes Gemisch ein:
50 bis 99,99, bevorzugt 80 bis 90 Gew.-% 6-Aminocapronitril,
0,01 bis 50, bevorzugt von 1 bis 30 Gew.-% mindestens einer Dicarbonsäure, ausgewählt aus der Gruppe bestehend aus aliphatischen C₄-C₁₀-α, ω-Dicarbonsäuren, aromatischen C₈-C₁₂-Dicarbonsäuren und C₅-C₈-Cycloalkandicarbonsäuren,
0 bis 50 bevorzugt 0,1 bis 30 Gew.-% eines α,ω-Diamins mit 4 bis 10 Kohlenstoffatomen,
0 bis 50 bevorzugt 0 bis 30 Gew.-% eines α,ω-C₂-C₁₂-Dinitrils sowie
0 bis 50 bevorzugt 0 bis 30 Gew.-% eines α, ω-C₅-C₁₂-Aminosäure oder des entsprechenden Lactams,
0 bis 10 Gew.-% mindestens einer anorganischen Säure oder deren Salz,
wobei die Summe der einzelnen Gewichtsprozentangaben 100 % beträgt.

Als Dicarbonsäuren kann man aliphatische C₄-C_{10-α}, ω-Dicarbonsäuren, wie Bemsteinsäure, Glutarsäure, Adipinsäure, Pimelinsäure, Korksäure, Azelainsäure, Sebazinsäure, bevorzugt Adipinsäure und Sebazinsäure, besonders bevorzugt Adipinsäure, und aromatische C₈-C₁₂-Dicarbonsäuren wie Terephthalsäure sowie C₅-C₈-Cycloalkandicarbonsäuren wie Cyclohexandicarbonsäure einsetzen.

Als α, ω-Diamin mit 4 bis 10 Kohlenstoffatomen kann man Tetramethylendiamin, Pentamethylendiamin, Hexamethylendiamin, Heptamethylendiamin, Octamethylendiamin, Nonamethylendiamin und Decamethylendiamin, bevorzugt Hexamethylendiamin, einsetzen.

Desweiteren ist es auch möglich, Salze aus den genannten Dicarbonsäuren und Diaminen einzusetzen, insbesondere das Salz aus Adipinsäure und Hexamethylendiamin, sogenanntes AH-Salz.

Als α, ω-C₂-C₁₂-Dinitril setzt man bevorzugt aliphatische Dinitrile, wie 1,4-Dicyanbutan (Adipodinitril), 1,5-Dicyanpentan, 1,6-Dicyanhexan, 1,7-Dicyanheptan, 1,8-Dicyanoctan, 1,9-Dicyannonan, 1,10-Dicyandecan, besonders bevorzugt Adipodinitril, ein.

Gewünschtenfalls kann man auch Diamine, Dinitrile und Aminonitrile, die sich von verzweigten Alkylen- oder Arylen- oder Alkylarylenen ableiten, verwenden.

Als α,ω-C₅-C₁₂-Aminosäure kann man 5-Aminopentansäure, 6-Aminohexansäure, 7-Aminoheptansäure, 8-Aminooctansäure, 9-Aminononansäure, 10-Aminodecansäure, 11-Aminoundecansäure und 12-Aminododecansäure, bevorzugt 6-Aminohexansäure, einsetzen.

Das Aminonitril/Wasser-Gemisch wird vor der Einführung in die erste Stufe mit Hilfe eines Wärmetauschers erhitzt. Das Aminonitril und das Wasser können auch getrennt voneinander erhitzt in der ersten Stufe durch den Einsatz von Mischelementen vermischt werden. Das Eduktgemisch wird in der Stufe (1) in einen Strömungsreaktor gepumpt, der Titandioxid-Füllkörper und metallische Füllkörper enthält.

Bei den Füllkörpern eines Brönsted-Säurekatalysators, ausgewählt aus Beta-Zeolith-, Schichtsilikat- oder Titandioxid-Füllkörpem handelt es sich vorzugsweise um Stränge oder ein Granulat. Besonders bevorzugt wird ein Granulat mit einer mittleren Länge von 5 bis 20 mm und einem mittleren Durchmesser von 3 bis 6 mm eingesetzt. Insbesondere sind Titandioxid-Granulate mit einer mittleren Länge von ungefähr 10 mm und einem Durchmesser von 4 mm bevorzugt. Das Titandioxid besteht dabei vorzugsweise zu 70 bis 100 Gew.-% aus Anatas und 0 bis 30 Gew.-% aus Rutil. Beim Einsatz von Aminonitrilen, die im wesentlichen rein oder vollständig rein sind, wird bevorzugt ein Titandioxid-Füllkörper aus Anatas eingesetzt. Beim Vorliegen von Verunreinigungen im Aminonitril wird vorzugsweise ein Titandioxid-Füllkörper eingesetzt, der aus 70 bis 80 Gew.-% Anatas und 20 bis 30 Gew.-% Rutil, besonders bevorzugt etwa 70 Gew.-% Anatas und etwa 30 Gew.-% Rutil besteht. Der Katalysator weist vorzugsweise ein Porenvolumen von 0,1 bis 5 ml/g, besonders bevorzugt 0,2 bis 0,5 ml/g auf. Der mittlere Porendurchmesser beträgt vorzugsweise 0,005 bis 0,1 µm, besonders bevorzugt 0,01 bis 0,06 µm. Wird mit hochviskosen Produkten gearbeitet, sollte der mittlere Porendurchmesser groß gewählt werden. Die Schneidhärte ist vorzugsweise größer 20 N, besonders bevorzugt > 25 N. Die BET-Oberfläche beträgt vorzugsweise mehr als 40 m²/g, besonders bevorzugt mehr als 100 m²/g. Bei einer kleiner gewählten BET-Oberfläche sollte das Schüttvolumen entsprechend höher gewählt werden, um eine ausreichende Katalysatoraktivität zu gewährleisten. Besonders bevorzugte Katalysatoren weisen folgende Eigenschaften auf: 100 % Anatas; 0,3 ml/g Porenvolumen; 0,02 µm mittlerer Porendurchmesser; 32 N Schneidhärte; 116 m²/g BET-Oberfläche oder 84 Gew.-% Anatas; 16 Gew.-% Rutil; 0,3 ml/g Porenvolumen; 0,03 µm mittlerer Porendurchmesser; 26 N Schneidhärte; 46 m²/g BET-Oberfläche. Die Katalysatoren können dabei aus handelsüblichen Pulvern, wie sie beispielsweise von Degussa, Finnti oder Kemira angeboten werden, hergestellt werden. Beim Einsatz eines Anteils an Wolframoxid werden bis zu 40 Gew.-%, vorzugsweise bis zu 30 Gew.-%, besonders bevorzugt 15 bis 25 Gew.-% des Titandioxids durch Wolframoxid ersetzt. Die Konfektionierung der Katalysatoren kann wie in Ertl, Knözinger, Weitkamp: "Handbook of heterogeneous catalysis", VCH Weinheim, 1997, Seiten 98ff beschrieben erfolgen.

Die metallischen Füllkörper sind vorzugsweise aus korrosionsbeständigen Metallen, insbesondere korrosionsbeständigem Stahl aufgebaut. Die Füllkörper können dabei jede geeignete Geometrie haben. Besonders bevorzugt handelt es sich um Raschig-Ringe. Die Raschig-Ringe weisen dabei vorzugsweise einen Durchmesser von 2 bis 6 mm, insbesondere etwa 3 mm auf.

Die Größe der Granulate wird vorteilhaft so gewählt, daß zum einen eine mechanische Abtrennung des Granulats durch Filter und Siebe problemlos möglich ist, zum anderen der durch den Strömungswiderstand hervorgerufene Druckaufbau aufgrund der erhöhten Festkörperdichte im Reaktor technisch kontrollierbar bleibt. Die mittlere Schüttdichte im Strömungsrohr-Reaktor kann durch ein geeignetes Verhältnis von Füllkörper eines Brönsted-Säurekatalysators, ausgewählt aus Beta-Zeolith-, Schichtsilikat- oder Titandioxid-Füllkörpem, zu metallischem Füllkörper eingestellt werden. Dabei können im Strömungsrohr Gemische der Füllkörper eines Brönsted-Säurekatalysators, ausgewählt aus Beta-Zeolith-, Schichtsilikat- oder Titandioxid-Füllkörpern vorliegen. Die Füllkörper eines Brönsted-Säurekatalysators, ausgewählt aus Beta-Zeolith-, Schichtsilikat- oder Titandioxid-Füllkörpern, und die metallischen Füllkörper sind im Strömungsrohr alternierend geschichtet. In Strömungsrichtung folgt dabei vorzugsweise auf eine Schicht von Füllkörpern eines Brönsted-Säurekatalysators, ausgewählt aus Beta-Zeolith-, Schichtsilikat- oder von Titandioxid-Füllkörpern, eine Schicht von metallischen Füllkörpern. Es kann auch eine abwechelnde Schichtfolge beider Füllkörper mit 3 bis 20, vorzugsweise 3 bis 15 Schichten vorliegen.

Einen Vergleich zwischen einer Schüttung, die eine Schicht Titandioxid-Granulat und darauffolgend eine Schicht Raschig-Ringe aufweist, zu einer Schüttung, die nur Raschig-Ringe aufweist, zeigt die Zeichnung.

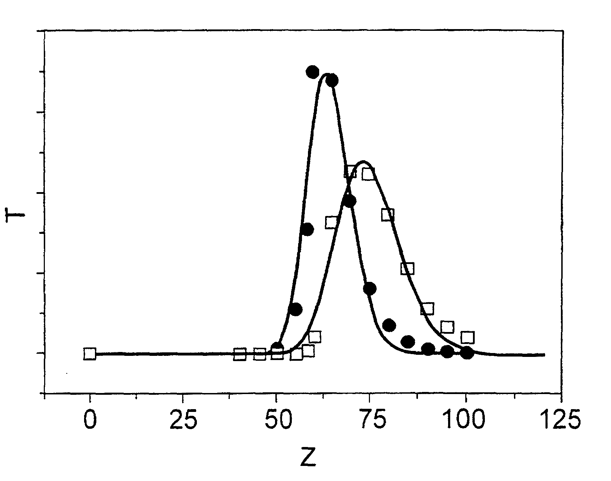

In Figur 1 ist die Verweilzeit in Form einer Auftragung der Konzentration T gegen die Zeit Z in Minuten für die Schüttung mit Titandioxid-Granulat (ausgefüllte kreise) und eine Schüttung aus Raschig-Ringen (nich ausgefüllte Kästchen) angegeben.

Die Verweilzeitverteilung für die erfindungsgemäße Schüttung ist wesentlich enger als für die Schüttung, die ausschließlich aus Raschig-Ringen besteht.

Nachstehend werden die Umsetzungsbedingungen für die Stufe 1 angegeben. Wenn in Stufe 3, die nachstehend beschrieben ist, ebenfalls die erfindungsgemäße Schüttung eingesetzt wird, gelten entsprechende Reaktionsbedingungen.

Erfindungsgemäß wird in der ersten Stufe (Stufe 1) ein Aminonitril mit Wasser bei einer Temperatur von 90 bis 400°C, vorzugsweise 180 bis 310°C und insbesondere bei 220 bis 270°C erhitzt, wobei ein Druck von 0,1 bis 15 x 10⁶ Pa, vorzugsweise 1 bis 10 x 10⁶ Pa eingestellt wird. Dabei können in dieser Stufe Druck und Temperatur so aufeinander abgestimmt werden, daß eine flüssige oder eine feste Phase und ein Gemisch aus flüssiger oder fester Phase und eine gasförmige Phase erhalten werden. Vorzugsweise soll das Reaktionsgemisch einphasig flüssig vorliegen, d.h. im Gemisch keine Gasphase vorhanden sein.

In Stufe 1 können Druck und Temperatur gewünschtenfalls auch so eingestellt werden, daß im Reaktor eine gasförmige und eine flüssige Phase vorliegen. Im Rahmen der ersten Stufe kann dann die gasförmige Phase von der flüssigen abgetrennt werden. Bevorzugt wird bei der zweiphasigen Fahrweise ein Druck gewählt, der größer ist als der zur Massetemperatur der Reaktionsmischung gehörende Dampfdruck von reinem Wasser, jedoch kleiner als der Gleichgewichtsdampfdruck von Ammoniak. Im Fall der zweiphasigen Fahrweise ist es vorteilhaft, den Rohrreaktor axial-senkrecht stehend zu betreiben. Dieser kann vollständig oder teilweise mit der oben beschriebenen Schichtung oder Mischung aus Füllkörpern eines Brönsted-Säurekatalysators, ausgewählt aus Beta-Zeolith-, Schichtsilikat- oder Titandioxid-Füllkörpern und metallischen Füllkörpern gefüllt sein. In einer bevorzugten Ausführungsform enthält der senkrecht stehende Reaktor bei zweiphasiger Fahrweise maximal bis zur Phasengrenze Granulat eines Brönsted-Säurekatalysators, ausgewählt aus Beta-Zeolith-, Schichtsilikat- oder Titandioxid-Granulat, während das die Gasphase enthaltende Reaktorvolumen vorzugsweise ausschließlich mit metallischen Füllkörpern wie Raschig-Ringen gefüllt ist.

Erfindungsgemäß setzt man Wasser in einem Molverhältnis von Aminoalkylnitril zu Wasser im Bereich von 1:1 bis 1:10, besonders bevorzugt von 1:2 bis 1:8, ganz besonders bevorzugt von 1:2 bis 1:6, ein, wobei der Einsatz von Wasser im Überschuß, bezogen auf das eingesetzte Aminoalkylnitril, bevorzugt ist.

Bei dieser Ausführungsform entspricht die flüssige oder feste Phase oder das Gemisch aus flüssiger und fester Phase dem Umsetzungsgemisch, während die gasförmige Phase abgetrennt wird. Dabei können im Rahmen dieser Stufe die gasförmige Phase sofort von der flüssigen oder festen Phase oder dem Gemisch aus fester oder flüssiger Phase abgetrennt werden, oder das sich innerhalb dieser Stufe bildende Reaktionsgemisch kann zweiphasig flüssig-gasförmig, fest-gasförmig oder flüssig/fest-gasförmig vorliegen. Selbstverständlich können Druck und Temperatur auch so aufeinander abgestimmt werden, daß das Reaktionsgemisch einphasig-fest oder -flüssig vorliegt.

Die Abtrennung der Gasphase kann durch den Einsatz von gerührten oder nichtgerührten Abscheidekesseln oder Kesselkaskaden sowie durch den Einsatz von Verdampferapparaten erfolgen, z.B. durch Umlaufverdampfer oder Dünnschichtverdampfer, wie z.B. durch Filmextruder oder durch Ringscheibenreaktoren, die eine vergrößerte Phasengrenzfläche garantieren. Gegebenenfalls ist ein Umpumpen der Reaktionsmischung bzw. der Einsatz eines Schlaufenreaktors notwendig, um die Phasengrenzfläche zu vergrößern. Des weiteren kann die Abtrennung der Gasphase durch die Zugabe von Wasserdampf oder Inertgas in die flüssige Phase gefördert werden.

Bevorzugt wird bei einer vorgewählten Temperatur der Druck so eingestellt, daß er kleiner ist als der Gleichgewichtsdampfdruck von Ammoniak, jedoch größer als der Gleichgewichtsdampfdruck der übrigen Komponenten im Reaktionsgemisch bei der vorgegebenen Temperatur. Auf diese Weise kann insbesondere die Abscheidung von Ammoniak begünstigt und somit die Hydrolyse der Säureamidgruppen beschleunigt werden.

Bezüglich der Verweilzeit des Reaktionsgemischs in der ersten Stufe bestehen keinerlei Beschränkungen; sie wird jedoch im allgemeinen im Bereich von ungefähr 10 Minuten bis ungefähr 10 Stunden, vorzugsweise zwischen ungefähr 30 Minuten und ungefähr 6 Stunden gewählt.

Obwohl auch bezüglich des Umsatzes an Nitrilgruppen in Stufe 1 keinerlei Beschränkungen existieren, beträgt insbesondere aus wirtschaftlichen Gründen der Umsatz an Nitrilgruppen in Stufe 1 im allgemeinen nicht weniger als ungefähr 70 mol-%, vorzugsweise mindestens ungefähr 95 mol-% und insbesondere ungefähr 97 bis ungefähr 99 mol-%, jeweils bezogen auf die Molzahl an eingesetztem Aminonitril.

Den Umsatz an Nitrilgruppen ermittelt man üblicherweise mittels IR-Spektroskopie (CN-Valenz-Schwingung bei 2247 Wellenzahlen), NMR oder HPLC, bevorzugt durch IR-Spektroskopie.

Weiterhin ist es erfindungsgemäß nicht ausgeschlossen, die Umsetzung in Stufe 1 auch in Gegenwart von sauerstoffhaltigen Phosphorverbindungen, insbesondere Phosphorsäure, phosphoriger Säure und hypophosphoriger Säure sowie deren Alkalimetall- und Erdalkalimetallsalzen und Ammoniumsalzen wie Na₃PO₄, NaH₂PO₄, Na₂HPO₄, NaH₂PO₃, Na₂HPO₃, NaH₂PO₂, K₃PO₄, KH₂PO₄, K₂HPO₄, KH₂PO₃, K₂HPO₃, KH₂PO₂ durchzuführen, wobei man das Molverhältnis von ω-Aminonitril zu Phosphorverbindungen im Bereich von 0,01:1 bis 1:1, bevorzugt von 0,01:1 bis 0,1:1 wählt.

Erfindungsgemäß wird das in der ersten Stufe erhaltene Umsetzungsgemisch in Stufe 2 bei einer Temperatur von 150°C (200°C) bis 400°C (350°C), vorzugsweise einer Temperatur im Bereich von 300°C (230°C) bis 330°C (300°C) und insbesondere im Bereich von 230°C bis 290°C (270°C) und einem Druck, der niedriger ist als der Druck in Stufe 1 weiter umgesetzt. Vorzugsweise ist der Druck in der zweiten Stufe mindestens 0,5 x 10⁶ Pa niedriger als der Druck in Stufe 1, wobei im allgemeinen der Druck im Bereich von 0,1 bis 45 x 10⁶ Pa, vorzugsweise 0,5 bis 15 x 10⁶ Pa und insbesondere 0,2 bis 6 x 10⁶ Pa liegt.

Dabei werden in Stufe 2 die Temperatur und der Druck so gewählt, daß eine erste Gasphase und eine erste flüssige oder erste feste Phase oder ein Gemisch aus erster flüssiger und erster fester Phase erhalten werden, und die erste Gasphase von der ersten flüssigen oder ersten festen Phase oder dem Gemisch aus erster flüssiger und erster fester Phase abgetrennt wird.

Die erste gasförmige Phase, die im wesentlichen aus Ammoniak und Wasserdampf besteht, entfernt man im allgemeinen kontinuierlich mit Hilfe einer Destillationsvorrichtung, wie einer Destillationskolonne. Die bei dieser Destillation gegebenenfalls mitabgeschiedenen organischen Bestandteile des Destillats, im überwiegendem Maße nicht umgesetztes Aminonitril, können in Stufe 1 und/oder Stufe 2 vollständig oder teilweise zurückgeführt werden.

Die Verweilzeit des Umsetzungsgemischs in Stufe 2 unterliegt keinerlei Beschränkungen, beträgt jedoch im allgemeinen ungefähr 10 Minuten bis ungefähr 5 Stunden, vorzugsweise ungefähr 30 Minuten bis ungefähr 3 Stunden.

Die Produktleitung zwischen der ersten und zweiten Stufe enthält gegebenenfalls Füllkörper, wie Raschig-Ringe oder Sulzer-Mischelemente, die eine kontrollierte Entspannung des Umsetzungsgemischs in die Gasphase ermöglichen. In Stufe 3 wird die erste flüssige oder die erste feste Phase oder das Gemisch aus erster flüssiger und erster fester Phase mit einer gasförmigen oder flüssigen Phase, die Wasser enthält, vorzugsweise Wasser oder Wasserdampf versetzt. Dies geschieht kontinuierlich. Die Menge an zugegebenem Wasser (als Flüssigkeit) liegt vorzugsweise im Bereich von ungefähr 50 bis ungefähr 1500 ml, weiter bevorzugt ungefähr 100 bis ungefähr 500 ml, jeweils bezogen auf 1 kg der ersten flüssigen oder ersten festen Phase oder des Gemischs aus erster flüssiger und erster fester Phase. Durch diesen Wasserzusatz werden in erster Linie die in der Stufe 2 verursachten Wasserverluste kompensiert und die Hydrolyse von Säureamidgruppen im Reaktionsgemisch gefördert. Daraus resultiert als weiterer Vorteil dieser Erfindung, daß das Gemisch der Ausgangsprodukte, wie es in Stufe 1 eingesetzt wird, lediglich mit einem kleinen Wasserüberschuß eingesetzt werden kann,

Vorzugsweise wird die Wasser enthaltende gasförmige oder flüssige Phase vor der Einleitung in Stufe 3 in einem Wärmetauscher vorgeheizt und anschließend mit der ersten flüssigen oder der ersten festen Phase oder dem Gemisch aus erster fester und erster flüssiger Phase vermischt. Dabei können gegebenenfalls Mischelemente im Reaktor eingesetzt werden, die die Durchmischung der Komponenten fördern.

Stufe 3 kann bei einer Temperatur von 150 bis 370°C und einem Druck von 0,1 bis 30 x 10⁶ Pa betrieben werden, beim Vorliegen der erfindungsgemäßen Schüttung können die für Stufe 1 geltenden Bedingungen angewendet werden.

Dabei können Druck und Temperatur so aufeinander abgestimmt werden, daß das Reaktionsgemisch einphasig-flüsssig oder einphasig-fest vorliegt. In einer anderen Ausführungsform werden Druck und Temperatur so gewählt, daß eine flüssige oder eine feste Phase oder ein Gemisch aus fester und flüssiger Phase sowie eine gasförmige Phase erhalten werden. Bei dieser Ausführungsform entspricht die flüssige oder feste Phase oder das Gemisch aus flüssiger und fester Phase dem Produktgemisch, während die gasförmige Phase abgetrennt wird. Dabei können im Rahmen dieser Stufe die gasförmige Phase sofort von der flüssigen oder festen Phase oder dem Gemisch aus fester oder flüssiger Phase abgetrennt werden, oder das sich innerhalb dieser Stufe bildende Reaktionsgemisch zweiphasig flüssiggasförmig, fest-gasförmig oder flüssig/fest-gasförmig vorliegen.

Bei einer vorgewählten Temperatur kann der Druck so eingestellt werden, daß er kleiner ist als der Gleichgewichtsdampfdruck von Ammoniak, jedoch größer als der Gleichgewichtsdampfdruck der übrigen Komponenten im Reaktionsgemisch bei der vorgegebenen Temperatur. Auf diese Weise kann insbesondere die Abscheidung von Ammoniak begünstigt und somit die Hydrolyse der Säureamidgruppen beschleunigt werden.

Die in dieser Stufe einsetzbaren Apparaturen/Reaktoren können mit denen der Stufe 1, wie oben diskutiert, identisch sein.

Die Verweilzeit in dieser Stufe unterliegt ebenfalls keinen Beschränkungen, aus wirtschaftlichen Gründen wählt man sie jedoch im allgemeinen im Bereich zwischen ungefähr 10 Minuten bis ungefähr 10 Stunden, vorzugsweise zwischen ungefähr 60 bis ungefähr 8 Stunden, besonders bevorzugt ungefähr 60 Minuten bis ungefähr 6 Stunden.

Das in Stufe 3 erhaltene Produktgemisch kann dann, wie weiter unten beschrieben, weiterverarbeitet werden.

In einer bevorzugten Ausführungsform wird das Produktgemisch der Stufe 3 in einer vierten Stufe einer Nachkondensation bei einer Temperatur von ungefähr 200 bis ungefähr 350°C, vorzugsweise einer Temperatur von ungefähr 220 bis 300°C und insbesondere ungefähr 250 bis 270°C unterworfen. Stufe 4 wird bei einem Druck durchgeführt, der unterhalb des Drucks der Stufe 3 liegt, und vorzugsweise in einem Bereich von ungefähr 5 bis 1000 x 10³ Pa, weiter bevorzugt ungefähr 10 bis ungefähr 300 x 10³ Pa liegt. Im Rahmen dieser Stufe werden Temperatur und Druck so gewählt, daß eine zweite Gasphase und eine zweite flüssige oder feste Phase oder ein Gemisch aus zweiter flüssiger und zweiter fester Phase, die das Polyamid enthalten, erhalten werden.

Vorzugsweise wird die Nachkondensation gemäß Stufe 4 so durchgeführt, daß die relative Viskosität (gemessen bei einer Temperatur von 25°C und einer Konzentration von 1 g Polymer pro 100 ml in 96 Gew.-%iger Schwefelsäure) des Polyamids einen Wert im Bereich von ungefähr 1,6 bis ungefähr 3,5 einnimmt.

In einer bevorzugten Ausführungsform kann man aus der flüssigen Phase gegebenenfalls vorhandenes Wasser mittels eines Inertgases wie Stickstoff austreiben.

Die Verweilzeit des Reaktionsgemischs in Stufe 4 richtet sich insbesondere nach der gewünschten relativen Viskosität, der Temperatur, dem Druck und der in Stufe 3 zugesetzten Wassermenge.

Wird die Stufe 3 einphasig betrieben, so können in der Produktleitung zwischen der Stufe 3 und der Stufe 4 gegebenenfalls Füllkörper, bestehend z.B. aus Raschig-Ringen oder Sulzer-Mischelementen, eingesetzt werden, welche eine kontrollierte Entspannung des Reaktionsgemischs in der Gasphase ermöglichen.

In einer weiteren Ausführungsform kann erfindungsgemäß auf Stufe 3 verzichtet werden und zur Herstellung des Polyamid die Stufen (1), (2) und (4) ausgeführt werden.

Vorzugsweise wird diese Variante wie folgt durchgeführt:
Das Umsetzungsgemisch wird in Stufe 2 wie vorstehend beschrieben oder bei einer Temperatur im Bereich von ungefähr 220 bis ungefähr 300°C und einem Druck im Bereich von ungefähr 1 bis ungefähr 7 x 10⁶ Pa behandelt, wobei der Druck in der zweiten Stufe mindestens 0,5 x 10⁶ Pa niedriger ist als in Stufe 1. Gleichzeitig wird die entstandene erste Gasphase von der ersten flüssigen Phase abgetrennt.

Die in Stufe 2 erhaltene erste flüssige Phase wird in Stufe 3 wie in Stufe 1 oder bei einer Temperatur im Bereich von ungefähr 220 bis 300°C und einem Druck im Bereich von ungefähr 10 bis ungefähr 300 x 10³ Pa behandelt, wobei die dabei enstehende zweite, Wasser und Ammoniak enthaltende Gasphase von der zweiten flüssigen Phase abgetrennt wird. Innerhalb dieser Stufe wird die relative Viskosität (gemessen wie oben definiert) des erhaltenen Polyamids auf einen gewünschten Wert im Bereich von ungefähr 1,6 bis ungefähr 3,5 durch Wahl der Temperatur und der Verweilzeit eingestellt.

Anschließend wird die so erhaltene zweite flüssige Phase nach üblichen Methoden ausgetragen und, falls dies erwünscht ist, aufgearbeitet.

In einer weiteren bevorzugten Ausführungsform der vorliegenden Erfindung kann mindestens eine der in den jeweiligen Stufen erhaltenen Gasphasen in mindestens eine der vorhergehenden Stufen zurückgeführt werden.

Es ist weiterhin bevorzugt, daß in Stufe 1 oder in Stufe 3 oder sowohl in Stufe 1 als auch in Stufe 3 die Temperatur und der Druck so gewählt werden, daß eine flüssige oder eine feste Phase oder ein Gemisch aus flüssiger und fester Phase und eine gasförmige Phase erhalten werden, und die gasförmige Phase abgetrennt wird.

Ferner kann man im Rahmen des erfindungsgemäßen Verfahrens auch eine Kettenverlängerung oder eine Verzweigung oder eine Kombination aus beidem durchführen. Dazu werden dem Fachmann bekannte Substanzen zur Verzweigung bzw. Kettenverlängerung von Polymeren in den einzelnen Stufen zugesetzt. Vorzugsweise werden diese Substanzen in Stufe 3 oder 4 zugesetzt.

Als einsetzbare Substanzen sind zu nennen:

Trifunktionelle Amine oder Carbonsäuren als Verzweiger beziehungsweise als Vernetzer. Beispiele geeigneter mindestens trifinktioneller Amine oder Carbonsäuren sind beschrieben in der EP-A-0 345 648. Die mindestens trifunktionellen Amine weisen mindestens drei Aminogruppen auf, die zur Umsetzung mit Carbonsäuregruppen fähig sind. Sie weisen vorzugsweise keine Carbonsäuregruppen auf. Die mindestens trifimktionellen Carbonsäuren weisen mindestens drei zur Umsetzung mit Aminen befähigte Carbonsäuregruppen auf, die beispielsweise auch in Form ihrer Derivate, wie Ester, vorliegen können. Die Carbonsäuren weisen vorzugsweise keine zur Reaktion mit Carbonsäuregruppen befähigten Aminogruppen auf. Beispiele geeigneter Carbonsäuren sind Trimesinsäure, trimerisierte Fettsäuren, die beispielsweise aus Ölsäure hergestellt sein können und 50 bis 60 C-Atome aufweisen können, Naphthalinpolycarbonsäuren, wie Naphthalin-1,3,5,7-tetracarbonsäure. Vorzugsweise sind die Carbonsäuren definierte organische Verbindungen und keine polymeren Verbindungen.

Amine mit mindestens 3 Aminogruppen sind beispielsweise Nitrilotrialkylamin, insbesondere Nitrilotriethanamin, Dialkylentriamine, insbesondere Diethylentriamin, Trialkylentetramine und Tetraalkylenpentamine, wobei die Alkylenreste vorzugsweise Ethylenreste sind. Weiterhin können als Amine Dendrimere verwendet werden. Vorzugsweise weisen die Dendrimere die allgemeine Formel I auf

(R₂N-(CH₂)ₙ)₂N-(CH₂)ₓ-N((CH₂)ₙ-NR₂)₂ (I)

in der
R H oder -(CH₂)ₙ-NR¹₂ mit
R¹ H oder -(CH₂)ₙ-NR²₂ mit
R² H oder -(CH₂)ₙ-NR³₂ mit
R³ H oder -(CH₂)ₙ-NH₂ ist,
n einen ganzzahligen Wert von 2 bis 6 hat und
x einen ganzzahligen Wert von 2 bis 14 hat.

Vorzugsweise weist n einen ganzzahligen Wert von 3 oder 4, insbesondere 3 und x einen ganzzahligen Wert von 2 bis 6, vorzugsweise von 2 bis 4, insbesondere 2 auf. Die Reste R können auch unabhängig voneinander die angegebenen Bedeutungen haben. Vorzugsweise ist der Rest R ein Wasserstoffatom oder ein Rest -(CH₂)ₙ-NH₂.

Geeignete Carbonsäuren sind solche mit 3 bis 10 Carbonsäuregruppen, vorzugsweise 3 oder 4 Carbonsäuregruppen. Bevorzugte Carbonsäuren sind solche mit aromatischen und/oder heterocyclischen Kernen. Beispiele sind Benzyl-, Naphthyl-, Anthracen-, Biphenyl-, Triphenylreste oder Heterocyclen wie Pyridin, Bipyridin, Pyrrol, Indol, Furan, Thiophen, Purin, Chinolin, Phenanthren, Poryphyrin, Phthalocyanin, Naphthalocyanin. Bevorzugt sind 3,5,3',5'-Biphenyltetracarbonsäure-Phthalocyanin, Naphthalocyanin, 3,5,5',5'-Biphenyl-tetra-carbonsäure, 1,3,5,7-Naphthalintetracarbonsäure, 2,4,6-Pyridintricarbonsäure, 3,5,3'5'-Bipyridyltetracarbonsäure, 3,5,3'5'-Benzophenontetracarbonsäure, 1,3,6,8-Akridintetracarbonsäure, besonders bevorzugt 1,3,5-Benzoltricarbonsäure (Trimesinsäure) und 1,2,4,5-Benzoltetracarbonsäure. Derartige Verbindungen sind technisch erhältlich oder können nach dem in der DE-A-43 12 182 beschriebenen Verfahren hergestellt werden. Bei der Verwendung von ortho-substituierten aromatischen Verbindungen wird vorzugsweise eine Imidbildung durch Wahl geeigneter Umsetzungstemperaturen verhindert.

Diese Substanzen sind mindestens trifunktionell, vorzugsweise mindestens tetrafünktionell. Dabei kann die Anzahl der fünktionellen Gruppen 3 bis 16, vorzugsweise 4 bis 10, besonders bevorzugt 4 bis 8 betragen. Es werden in den erfindungsgemäßen Verfahren entweder mindestens trifunktionelle Amine oder mindestens trifunktionelle Carbonsäuren eingesetzt, jedoch in den keine Gemische aus entsprechenden Aminen oder Carbonsäuren. Geringe Mengen an mindestens trifunktionellen Aminen können jedoch den trifunktionellen Carbonsäuren enthalten sein und umgekehrt.

Die Substanzen liegen in der Menge von 1 bis 50 µmol/g Polyamid, vorzugsweise 1 bis 35, besonders bevorzugt 1 bis 20 µmol/g Polyamid vor. Vorzugsweise sind die Substanzen in einer Menge von 3 bis 150, besonders bevorzugt 5 bis 100, insbesondere 10 bis 70 µmol/g Polyamid an Äquivalenten enthalten. Die Äquivalente beziehen sich dabei auf die Anzahl der funktionellen Aminogruppen oder Carbonsäuregruppen.

Difunktionelle Carbonsäuren oder difunktionelle Amine dienen als Kettenverlängerungsmittel. Sie weisen 2 Carbonsäuregruppen auf, die mit Aminogruppen umgesetzt werden können, oder 2 Aminogruppen, die mit Carbonsäuren umgesetzt werden können. Die difunktionellen Carbonsäuren oder Amine enthalten außer den Carbonsäuregruppen oder Aminogruppen keine weiteren fünktionellen Gruppen, die mit Aminogruppen oder Carbonsäuregruppen reagieren können. Vorzugsweise enthalten sie keine weiteren funktionellen Gruppen. Beispiele geeigneter difunktioneller Amine sind solche, die mit difunktionellen Carbonsäuren Salze bilden. Sie können linear aliphatisch sein, wie C₁₋₁₄-Alkylendiamin, vorzugsweise C₂₋₆-Alkylendiamin, beispielsweise Hexylendiamin. Sie können zudem cycloaliphatisch sein. Beispiele sind Isophorondiamin, Dicycycan, Laromin. Verzweigte aliphatische Diamine sind ebenfalls verwendbar, ein Beispiel ist Vestamin TMD (Trimethylhexamethylendiamin, hergestellt von der Hüls AG). Zudem können die Diamine aromatisch-aliphatisch sein, beispielsweise kann n-Xylylendiamin verwendet werden. Die gesamten Amine können jeweils durch C₁₋₁₂-, vorzugsweise

C₁₋₁₄-Alkylreste am Kohlenstoffgerüst substituiert sein.

Difunktionelle Carbonsäuren sind beispielsweise solche, die mit difunkitionellen Diaminen Salze bilden. Es können lineare aliphatische Dicarbonsäuren sein, die vorzugsweise C₄₋₂₀-Dicarbonsäuren sind. Beispiele sind Adipinsäure, Azelainsäure, Sebazinsäure, Suberinsäure. Sie können zudem aromatisch sein. Beispiele sind Isophthalsäure, Terephthalsäure, Naphthalindicarbonsäure, wie auch dimerisierte Fettsäuren.

Die difunktionellen Grundbausteine (c) werden vorzugsweise in Mengen von 1 bis 55, besonders bevorzugt 1 bis 30, insbesondere 1 bis 15 µm/g Polyamid eingesetzt.

Erfindungsgemäß trägt man das in Stufe 3 erhaltene Produktgemisch oder die zweite flüssige oder zweite feste Phase oder das Gemisch aus zweiter flüssiger und zweiter fester Phase (aus Stufe 4), die das Polyamid enthalten, vorzugsweise eine Polymerschmelze, nach üblichen Methoden, beispielsweise mit Hilfe einer Pumpe, aus dem Reaktionsgefäß aus. Anschließend kann man das erhaltene Polyamid nach an sich bekannten Methoden, wie sie z.B. in der DE-A 43 21 683 (S. 3, Z. 54 bis S. 4, Z.3) ausführlich beschrieben sind, aufarbeiten.

In einer bevorzugten Ausführungsform kann man den Gehalt an cyclischem Dimer im erfindungsgemäß erhaltenen Polyamid-6 weiter reduzieren, indem man das Polyamit zuerst mit einer wäßrigen Lösung von Caprolactam und anschließend mit Wasser extrahiert und/oder der Gasphasenextraktion (beispielsweise beschreiben in der EP-A-0 284 968) unterwirft. Die bei dieser Nachbehandlung anfallenden niedermolekularen Bestandteile wie Caprolactam und seine linearen sowie cyclischen Oligomere, kann man in die erste und/oder zweite und/oder dritte Stufe zurückführen.

Dem Ausgangsgemisch und dem Reaktionsgemisch können in allen Stufen Kettenregler, wie aliphatische und aromatische Carbon- und Dicarbonsäuren, und Katalysatoren, wie sauerstoffhaltige Phosphorverbindungen, in Mengen im Bereich von 0,01 bis 5 Gew.-%, bevorzugt von 0,2 bis 3 Gew.-%, bezogen auf die Menge an eingesetzten polyamidbildenden Monomeren und Aminonitrilen, zugesetzt werden. Geeignete Kettenregler sind zum Beispiel Propionsäure, Essigsäure, Benzoesäure, Terephthalsäure sowie Triacetondiamin.

Zusatz- und Füllstoffe wie Pigmente, Farbstoffe und Stabilisatoren werden in der Regel vor dem Granulieren, bevorzugt in der zweiten, dritten und vierten Stufe der Reaktionsmischung zugeführt. Besonders bevorzugt sind Füll- und Zusatzstoffe dann einzusetzen, wenn die Reaktions- bzw. Polymermischung im weiteren Verfahrensablauf nicht mehr in Gegenwart von Festbettkatalysatoren umgesetzt wird. Als Zusatzstoffe können die Zusammensetzungen von 0 bis 40 Gew.-%, bevorzugt von 1 bis 30 Gew.-%, bezogen auf die gesamte Zusammensetzung, eines oder mehrerer schlagzähmodifizierender Kautschuke enthalten.

Es können z.B. übliche Schlagzähmodifier verwendet werden, die für Polyamide und/oder Polyarylenether geeignet sind.

Kautschuke, die die Zähigkeit von Polyamiden erhöhen, weisen im allgemeinen zwei wesentliche Merkmale auf: sie enthalten einen elastomeren Anteil, der eine Glastemperatur von weniger als -10°C, vorzugsweise von weniger als -30°C aufweist, und sie enthalten mindestens eine funktionelle Gruppe, die mit dem Polyamid wechselwirken kann. Geeignete fünktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit der Blends erhöhen, seien z.B. folgende genannt:

EP- bzw. EPDM-Kautschuke, die mit den obigen funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat.

Diese Monomere können in der Schmelze oder in Lösung, gegebenenfalls in Gegenwart eines Radikalstartes wie Cumolhydroperoxid auf das Polymere aufgepropft werden.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die Struktur durch die Reihenfolge der Monomerenzugabe ergibt. Die weichen Bestandteile leiten sich im allgemeinen von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischen oligomeren Octamethyltetrasiloxan oder Tetravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankemen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich im allgemeinen von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeignet fünktionalisierter Monomere bei der Polymerisation der letzten Schale. Geeignete funktionalisierte Monomere sind beispielsweise Maleinsäure, Maleinsäureanhydrid, Mono- oder Diester oder Maleinsäure, tert-Butyl(meth-)acrylat, Acrylsäure, Glycidyl(meth-)acrylat und Vinyloxazolin. Der Anteil an Monomeren mit fünktionellen Gruppen beträgt im allgemeinen 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt im allgemeinen 1:9 bis 9:1, bevorzugt 3:7 bis 8:2.

Derartige Kautschuke, die die Zähigkeit von Polyamiden erhöhen, sind an sich bekannt und beispielsweise in der EP-A-0 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglykolen und kurzkettige Segmente, die sich von niedermolekularen Diolen und Dicarbonsäuren ableiten, enthalten. Derartige Produkte sind an sich bekannt und in der Literatur, z.B. in der US 3,651,014, beschrieben. Auch im Handel sind entsprechende Produkte unter den Bezeichnungen Hytrel® (Du Pont), Amitel® (Akzo) und Pelprene® (Toyobo Co. Ltd.) erhältlich.

Selbstverständlich können auch Mischungen verschiedener Kautschuke eingesetzt werden.

Als weitere Zusatzstoffe sind beispielsweise Verarbeitungshilfsmittel, Stabilisatoren und Oxidationsverzögerer, Mittel gegen Wärmezersetzung und Zersetzung durch ultraviolettes Licht, Gleit- und Entformungsmittel, Flammschutzmittel, Farbstoffe und Pigmente und Weichmacher zu nennen. Deren Anteil beträgt im allgemeinen bis zu 40, vorzugsweise bis zu 15 Gew.-%, bezogen auf das Gesamtgewicht der Zusammensetzung.

Pigmente und Farbstoffe sind allgemein in Mengen bis zu 4, bevorzugt 0,5 bis 3,5 und insbesondere 0,5 bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, Seiten 494 bis 510. Als erste bevorzugte Gruppe von Pigmenten sind Weißpigrnente zu nennen wie Zinkoxid, Zinksulfid, Bleiweiß (2 PbCO₃ Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-halogeniden, z.B. Chloriden, Bromiden oder Iodiden. Die Halogenide, insbesondere des Kupfers, können auch noch elektronenreiche p-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentration bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Die Erfindung wird nachstehend anhand von Beispielen näher erläutert.

### Beispiele

### Messung der Verweilzeit-Verteilung

Die Wirkung der verschiedenen Mischelemente auf die Verweilzeitverteilung wird in einem Glas-Rohrreaktor untersucht. Der Glaszylinder, der die gleiche Länge (100 cm) und den gleichen Innendurchmesser (3.6 cm) wie der zur ACN-Direktpolymerisation eingesetzte Rohrreaktor aufweist, ist hierzu mit den entsprechenden Mischelementen ausgerüstet. Als Mischelemente werden 3 mm Raschig-Ringe oder TiO₂-Stränge (Durchmesser 4 mm, Länge 5-10 mm) eingesetzt. Wasser durchströmt mit Hilfe einer HPLC-Pumpe das Strömungsrohr bei einem Durchsatz von 600 g/h.

Methylenblau (0,05%ig) dient als Markierungssubstanz. Die Tracer-Lösung wird mit einem Durchsatz von ebenfalls 600 g/h über die Haupt-Zulaufleitung dem Reaktoreingang zugeführt. Während der Injektion der Tracer-Lösung mit einer Dauer von 1 Minute ist der Zulauf der tracerfreien Flüssigkeit unterbrochen. Die Probenentnahme erfolgt am Reaktorausgang in Zeitabständen zwischen 3 und 5 Minuten. Die Tracerkonzentration der Proben wird via Absorptionsspektroskopie bestimmt.

### Charakterisierung der Verweilzeitverteilung durch Berechnung der Bodensteinzahl

Das Ziel der Auswertung ist die Charakterisierung der gemessenen Verweilzeit-Verteilungen, so daß die Wirkung der Mischelemente verglichen werden kann. Die mittlere Verweilzeit t'sowie die Bodensteinzahl Bₒ, die ein Maß für die Breite und Form der Verweilzeitkurven ist, sind hierbei die geeigneten Größen, um die Abhängigkeit des Verweilzeitverhaltens vom Mischelement darzustellen.

Die gemessenen Konzentrations (T)-Zeitprofile (Z) (T in willkürlichen Einheiten, Z in Minuten) der Tracer zeigen deutliche Abweichungen von einer Gauß-Verteilung, was auf starke axiale Dispersion hinweist. Es erscheint daher sinnvoll, das z.B. in Octave Levenspiel, Chemical Engineering, 2nd Edition, John Wiley & Sons, New York (1962), dargestellt Dispersionsmodell für reale Reaktoren zur Beschreibung der gemessenen Antwortfunktionen anzuwenden. In diesem Modell wird ein diffuser Term mit dem Dispersionskoeffizienten D eingeführt, der den Grad axialer Durchmischung berücksichtigt. Die analytische Lösung des Dispersionsmodells beschreibt die Abhängigkeit der Antwortfunktion C vom dimensionslosen Quotienten Bₒ, der Bodensteinzahl. 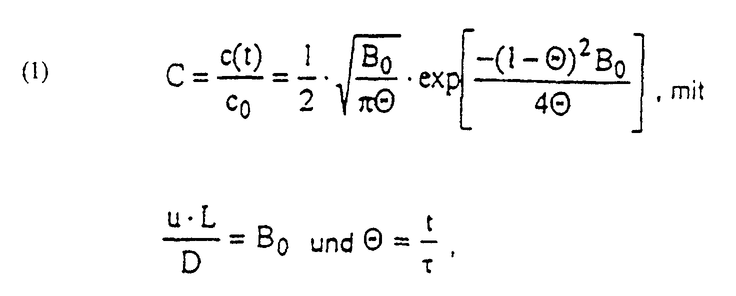 wobei u die hydrodynamische Strömungsgeschwindigkeit, I die Weglänge, D der Dispersionskoeffizient und τ die hydrodynamische Verweilzeit sind. Die Form der Verweilzeitkurven hängt von der axialen Dispersion ab und ist somit eine Funktion der Bodensteinzahl. Je größer diese ist, umso mehr entspricht die Strömung im Reaktor einer idealen Pfropfenströmung. Durch Anpassung von Gleichung (1) an die normierten Antwortfunktionen ergeben sich die entsprechenden Werte für die (Fit-)Parameter Bₒ und τ.

### Katalysatorherstellung

### Katalysator 1 Beta-Zeolith-Pulver

Als Katalysator wurde ein Beta-Zeolith von Uetikon (Zeokat-Beta) mit folgender Zusammensetzung eingesetzt: SiO₂=91%, Al₂O₃=7.8%, Na₂O=0.5%, K₂O =0.7%, BET-Oberfläche = 700 m²/g, Porengröße in Å = 7.6 x 6.7; 5.5 x 5.5, Teilchengröße 0.2-0.5 µm.

### Katalysator 2 Beta-Zeolith-Stränge

220 g ß-Zeolith aus dem Beispiel 1 wurden mit 5 % Walocel® und 230 g Wasser 45 Minuten lang im Kneter verdichtet. Anschließend wurde die Masse mit 70 bar Preßdruck zu 2 mm Strängen verformt. Diese wurden bei 110°C getrocknet und bei 500°C 16 h lang calciniert.

195 g dieser Stränge wurden mit 3 Liter 20%iger NH₄Cl-Lösung bei 80°C 2 h lang ausgetauscht und anschließend mit 10 1 Wasser gewaschen. Anschließend wurde ein zweiter Austausch mit ebenfalls 3 1 20%iger NH₄Cl-Lösung bei 80°C / 2 h vorgenommen und das Produkt Cl-frei gewaschen. Nach dem Trocknen bei 110°C wurde 5 h lang bei 500°C calciniert.

### Katalysator 3 Schichtsilikat Typ K10®

K10® ist ein säurebehandelter Montmorillonit von Süd-Chemie. Er hat eine BET-Oberfläche von 180-220 m²/g und ein Ionenaustauschäquivalent von 40-50 mVal/100 g.

### Katalysatoren 4 und 5 TiO₂-Stränge aus 100% bzw. 84% Anatas

Die Herstellung folgt der Beschreibung in Ertl, Knözinger, Weitkamp: "Handbook of heterogeous catalysis", VCH Weinheim, 1997; Seite 98ff. Die in der vorstehenden Beschreibung als besonders bevorzugt beschriebenen TiO₂-Modifikationen wurden mit Wasser, Silica-Sol und Glycerin vermischt, extrudiert und bei 550°C calciniert.

### Katalysator 6 Titandioxid-Wolframoxid-Katalysator

Der verwendete Katalysator wurde durch inniges Vermischen des handelsüblichen Titandioxids VKR 611 (von Sachtleben) mit Wolframoxid und anschließende Verstrangung gemäß Beispiel 2 oder 4 erhalten.

Er besitzt folgende Spezifilation: 20 Gew.-% WO₃, 80 Gew.-% TiO₂; BET-Oberfläche = 73 m²/g, Gesamtacidität (pKₛ=6,8) = 0,56 mmol/g; Gesamtacidität (pKₛ= -3) = 0,035 mmol/g.

### Beispiele 1-3

Die Tabelle zeigt die Verbesserung der Verweilzeitverteilung, d.h. die Verringerung der axialen Rückvermischung, durch den Einsatz von TiO₂-Granulat (Katalysator 4: Stränge mit einer Dicke von 4 mm und einer mittleren Länge von ca. 7 mm): Im Vergleich zur reinen TiO₂-Schüttung (Vergleichsbeispiel V1) und der TiO₂-freien Schüttung der Raschig-Ring-Füllkörper (Vergleichsbeispiel V2) ist die Verweilzeitverteilung der Beispiele 1 und 2 schmaler beziehungsweise die Bodensteinzahl Bₒ größer.

Das Meßergebnis des Beispiels 1, bei dem TiO₂-Granulat und Raschig-Ringe im Reaktor als Füllkörper dienen, und des Vergleichsbeispiels V2 mit (ausschließlich) Raschig-Ringen ist zusammen mit den berechneten Verweilzeit-Kurven in Abbildung 1 dargestellt.

Die alternierenden Schüttungen im Rohrreaktor werden durch die Schichtdicke und die verwendeten Füllkörper charakterisiert. Die angegebene Reihenfolge der Schüttungen entspricht der Schüttungsfolge im Reaktor in Strömungsrichtung beziehungsweise von unten nach oben.

| Beispiel | Schüttung, Schichtdicken in cm T=TiO₂-Granulat, R=Raschig-Ringe | Bodensteinzahl Bₒ |
|---|---|---|
| 1 | /21.5 T/72 R/ | 197 |
| 2 | 7x(15.5 T/5.5 R/)/23 R/ | 173 |
| V1 | /95 T/ | 86 |
| V2 | /95 R/ | 149 |

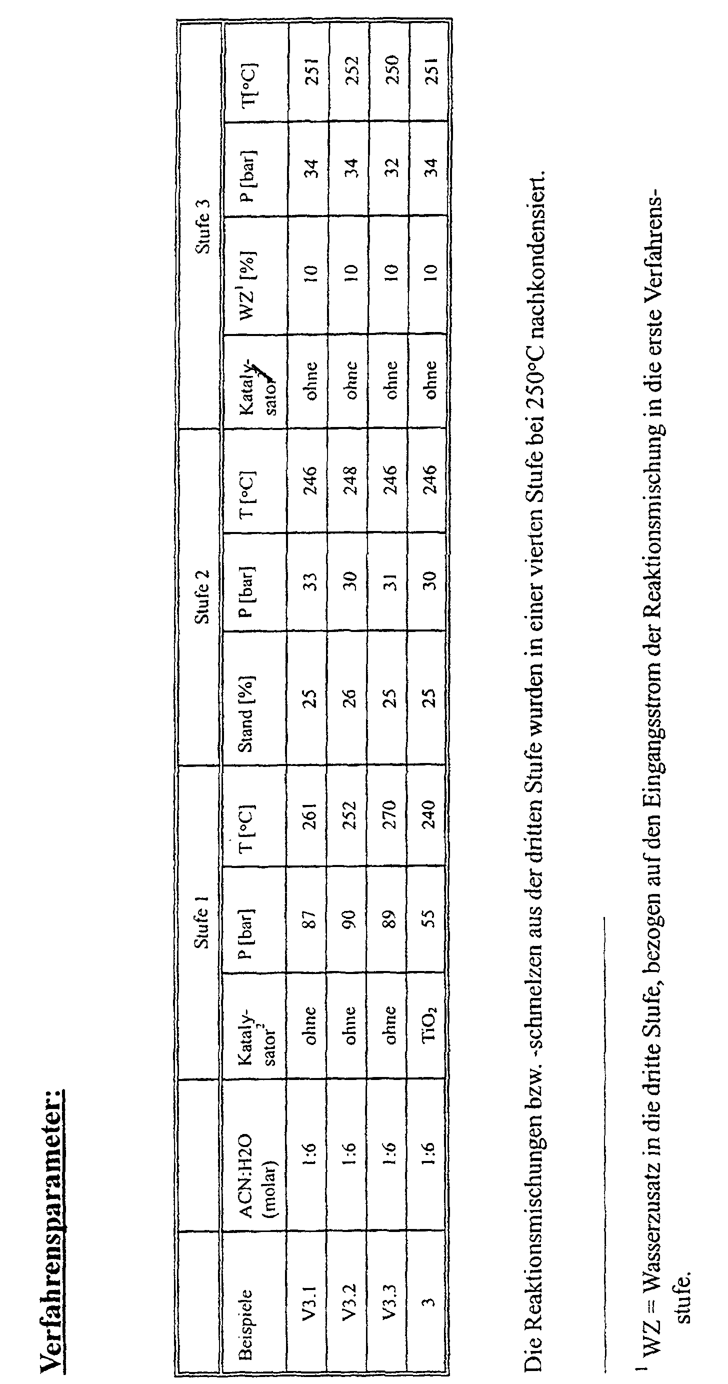

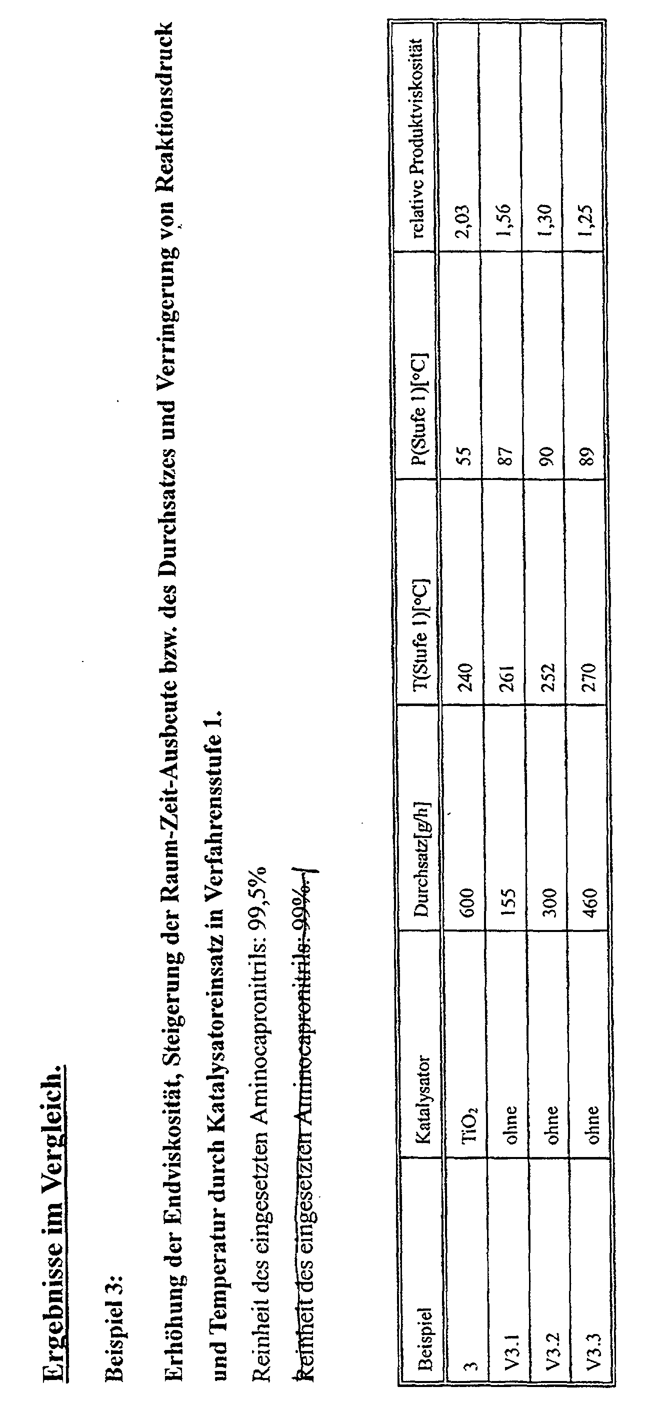

## Patentansprüche

1. Kontinuierliches Verfahren zur Herstellung eines Polyamids durch Umsetzung mindestens eines Aminonitrils mit Wasser, das die folgenden Stufen umfaßt:
(1) Umsetzung mindestens eines Aminonitrils mit Wasser im Molverhältnis 1:1 bis 1:10 bei einer Temperatur von 90 bis 400°C und einem Druck von 0,1 bis 15 x 10⁶ Pa in einem Strömungsrohr, das Füllkörper eines Brönsted-Säurekatalysators, ausgewählt aus Beta-Zeolith-, Schichtsilikat- oder Titandioxid-Füllkörpern, und metallische Füllkörper enthält, wobei die Füllkörper eines Brönsted-Säurekatalysators, ausgewählt aus Beta-Zeolith-, Schichtsilikat- oder Thandioxid-Füllkörpern, und die metallischen Füllkörper im Strömungsrohr alternierend geschichtet sind,
wobei ein Umsetzungsgemisch erhalten wird,
(2) weitere Umsetzung des Umsetzungsgemischs bei einer Termperatur von 150 bis 400°C und einem Druck, der niedriger ist als der Druck in Stufe 1, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Versetzen der ersten flüssigen oder der ersten festen Phase oder des Gemischs aus erster flüssiger und erster fester Phase mit einer gasförmigen oder flüssigen Phase, die Wasser enthält, bei einer Temperatur von 150 bis 370°C und einem Druck von 0,1 bis
30 x 10⁶ Pa, wobei ein Produktgemisch erhalten wird.

2. Verfahren nach Anspruch 1, **dadurch gekennzeichnet, daß** Stufe (3) in einem Strömungsrohr durchgeführt wird, das Füllkörper eines Brönsted-Säurekatalysators, ausgewählt aus Beta-Zeolith-, Schichtsilikat- oder Titandioxid-Füllkörpern, und metallische Füllkörper enthält, wobei die Füllkörper eines Brönsted-Säurekatalysators, ausgewählt aus Beta-Zeolith-, Schichtsilikat- oder Titandioxid-Füllkörpern, und die metallischen Füllkörper im Strömungsrohr alternierend geschichtet sind.

3. Verfahren nach Anspruch 1 oder 2, das zusätzlich folgende Stufe umfaßt
(4) Nachkondensation des Produktgemischs bei einer Temperatur von 200 bis 350°C und einem Druck, der niedriger ist als der Druck der Stufe 3, wobei die Temperatur und der Druck so gewählt werden, daß eine zweite, Wasser und Ammoniak enthaltende Gasphase und eine zweite flüssige oder zweite feste Phase oder ein Gemisch aus zweiter flüssiger und zweiter fester Phase, die (das) jeweils das Polyamid enthält, erhalten werden.

4. Kontinuierliches Verfahren zur Herstellung eines Polyamids durch Umsetzung mindestens eines Aminonitrils mit Wasser, das die folgenden Stufen umfaßt:
(1) Umsetzung mindestens eines Aminonitrils mit Wasser im Molverhältnis 1:1 bis 1:10 bei einer Temperatur von 90 bis 400°C und einem Druck von 0,1 bis 15 x 10⁶ Pa in einem Strömungsrohr, das Füllkörper eines Brönsted-Säurekatalysators, ausgewählt ans Beta-Zeolith-, Schichtsilikat- oder Titandioxid-Füllkörpern, und metallische Füllkörper enthält, wobei die Füllkörper eines Brönsted-Säurekatalysators, ausgewählt aus Beta-Zeolith-, Schichtsilikat- oder Titandioxid-Füllkörpern, und die metallischen Füllkörper im Strömungsrohr alternierend geschichtet sind,
wobei ein Umsetzungsgemisch erhalten wird,
(2) weitere Umsetzung des Umsetzungsgemischs bei einer Termperatur von 150 bis 400°C und einem Druck, der niedriger ist als der Druck in Stufe 1, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(4) Nachkondensation der ersten flüssigen oder der ersten festen Phase oder des Gemischs aus erster flüssiger und erster fester Phase bei einer Temperatur von 200 bis 350°C und einem Druck, der niedriger ist als der Druck der Stufe 2, wobei die Temperatur und der Druck so gewählt werden, daß eine zweite, Wasser und Ammoniak enthaltende Gasphase und eine zweite flüssige oder zweite feste Phase oder ein Gemisch aus zweiter flüssiger und zweiter fester Phase, die (das) jeweils das Polyamid enthält,
erhalten werden.

5. Verfahren nach einem der Ansprüche 1 bis 4, wobei in Stufe 1 oder in Stufe 3 oder sowohl in Stufe 1 als auch in Stufe 3 die Temperatur und der Druck so gewählt werden, daß eine flüssige oder eine feste Phase oder ein Gemisch aus flüssiger und fester Phase und eine gasförmige Phase erhalten werden, und die gasförmige Phase abgetrennt wird.

6. Verfahren nach einem der Ansprüche 1 bis 5, wobei die Titandioxid-Füllkörper aus TiO₂ mit 70 bis 100 Gew.-% Anatas und 0 bis 30 Gew.-% Rutil bestehen, in dem bis zu 40 Gew.-% des Titandioxids durch Wolframoxid ersetzt sein können.

7. Verfahren nach einem der Ansprüche 1 bis 6, wobei mindestens eine der in den jeweiligen Stufen erhaltenen Gasphasen in mindestens eine der vorhergehenden Stufen zurückgeführt wird.

8. Verfahren nach einem der Ansprüche 1 bis 7, wobei als Aminonitril ein ω-Aminoalkylnitril mit einem Alkylenrest (-CH₂-) von 4 bis 12 C-Atomen oder ein Aminoalkylarylnitril mit 8 bis 13 C-Atomen umgesetzt wird.

9. Verfahren nach einem der Ansprüche 1 bis 8, wobei folgendes Gemisch eingesetzt wird:
von 50 bis 99,99 Gew.-% 6-Aminocapronitril,
von 0,01 bis 50, Gew.-% mindestens einer Dicarbonsäure, ausgewählt aus der Gruppe bestehend aus aliphatischen C₄-C₁₀-α, ω-Dicarbonsäuren, aroma tischen C₈-C₁₂-Dicarbonsäuren und C₅-C₈-Cycloalkandicarbonsäuren,
von 0 bis 50 Gew.-% eines α,ω-Diamins mit 4 - 10 Kohlenstoffatomen,
von 0 bis 50 Gew.-% eines α,ω,-C₂-C₁₂-Dinitrils sowie
von 0 bis 50 Gew.-% einer α, ω-C₅-C₁₂-Aminosäure oder des entsprechenden Lactams,
von 0 bis 10 Gew.-% mindestens einer anorganischen Säure oder deren Salz,
wobei die Summe der einzelnen Gew.-%-Angaben 100 % beträgt.

## Claims

1. A continuous process for producing a polyamide by reacting at least one aminonitrile with water, comprising the following steps:
(1) reacting at least one aminonitrile with water in a molar ratio of 1:1 to 1:10 at a temperature from 90 to 400°C and a pressure from 0.1 to 15 × 10⁶ Pa in a flow tube containing packing elements of a Brönsted acid catalyst selected from beta-zeolite, sheet-silicate or titanium dioxide packing elements and metallic packing elements, the packing elements of a Brönsted acid catalyst selected from beta-zeolite, sheet-silicate or titanium dioxide packing elements and the metallic packing elements forming alternating layers in the flow tube to obtain a reaction mixture,
(2) further reacting the reaction mixture at from 150 to 400°C and a pressure which is lower than the pressure in step 1, the temperature and pressure being selected so as to obtain a first gas phase and a first liquid or a first solid phase or a mixture of first solid and first liquid phase and to separate the first gas phase from the first liquid or first solid phase or the mixture of first liquid and first solid phase, and
(3) admixing the first liquid or the first solid phase or the mixture of first liquid and first solid phase with a gaseous or liquid phase comprising water at a temperature from 150 to 370°C and a pressure from 0.1 to 30 × 10⁶ Pa to obtain a product mixture.

2. A process as claimed in claim 1, wherein step (3) is carried out in a flow tube containing packing elements of a Brönsted acid catalyst selected from beta-zeolite, sheet-silicate or titanium dioxide packing elements and metallic packings, the packing elements of a Brönsted acid catalyst selected from beta-zeolite, sheet-silicate or titanium dioxide packing elements and the metallic packing elements forming alternating layers in the flow tube.

3. A process as claimed in claim 1 or 2, further comprising the following step:
(4) postcondensing the product mixture at a temperature from 200 to 350°C and a pressure which is lower than the pressure in step 3, the temperature and pressure being selected so as to obtain a second, water- and ammonia-comprising gas phase and a second liquid or second solid phase or a mixture of second liquid and second solid phase, which each comprise the polyamide.

4. A continuous process for producing a polyamide by reacting at least one aminonitrile with water, comprising the following steps:
(1) reacting at least one aminonitrile with water in a molar ratio of 1:1 to 1:10 at a temperature from 90 to 400°C and a pressure from 0.1 to 15 × 10⁶ Pa in a flow tube containing packing elements of a Brönsted acid catalyst selected from beta-zeolite, sheet-silicate or titanium dioxide packing elements and metallic packing elements, the packing elements of a Brönsted acid catalyst selected from beta-zeolite, sheet-silicate or titanium dioxide packing elements and the metallic packing elements forming alternating layers in the flow tube to obtain a reaction mixture,
(2) further reacting the reaction mixture at from 150 to 400°C and a pressure which is lower than the pressure in step 1, the temperature and pressure being selected so as to obtain a first gas phase and a first liquid or a first solid phase or a mixture of first solid and first liquid phase and to separate the first gas phase from the first liquid or first solid phase or the mixture of first liquid and first solid phase, and
(4) postcondensing the first liquid or the first solid phase or the mixture of first liquid and first solid phase at a temperature from 200 to 350°C and a pressure which is lower than the pressure in step 2, the temperature and pressure being selected so as to obtain a second, water- and ammonia-comprising gas phase and a second liquid or second solid phase or a mixture of second liquid and second solid phase, which each comprise the polyamide.

5. A process as claimed in any of claims 1 to 4, wherein the temperature and pressure in step 1 or in step 3 or both in step 1 and step 3 are selected so as to obtain a liquid or a solid phase or a mixture of liquid and solid phase and a gaseous phase and to separate off the gaseous phase.

6. A process as claimed in any of claims 1 to 5, wherein the titanium dioxide packing elements consist of TiO₂ comprising from 70 to 100% by weight of anatase and from 0 to 30% by weight of rutile and in which up to 40% by weight of the titanium dioxide may be replaced by tungsten oxide.

7. A process as claimed in any of claims 1 to 6, wherein at least one of the gas phases obtained in the respective steps is recycled into at least one of the preceding steps.

8. A process as claimed in any of claims 1 to 7, wherein the aminonitrile reacted is an ω-aminoalkyl nitrile having an alkylene moiety (-CH₂-) of from 4 to 12 carbon atoms or an aminoalkylaryl nitrile having from 8 to 13 carbon atoms.

9. A process as claimed in any of claims 1 to 8, wherein the following mixture is used:
from 50 to 99.99% by weight of 6-aminocapronitrile,
from 0.01 to 50% by weight of at least one dicarboxylic acid selected from the group consisting of aliphatic C₄-C₁₀-α,ω-dicarboxylic acids, aromatic C₈-C₁₂-dicarboxylic acids and C₅-C₈-cycloalkanedicarboxylic acids,
from 0 to 50% by weight of an α,ω-diamine having 4-10 carbon atoms,
from 0 to 50% by weight of an α,ω-C₂-C₁₂-dinitrile, and
from 0 to 50% by weight of an α,ω-C₅-C₁₂-amino acid or of the corresponding lactam,
from 0 to 10% by weight of at least one inorganic acid or salt thereof,
the individual weight percentages adding up to 100%.

## Revendications

1. Procédé continu de préparation d'un polyamide par réaction d'au moins un aminonitrile avec de l'eau, comportant les étapes suivantes:
(1) Réaction d'au moins un aminonitrile avec de l'eau en proportion molaire de 1:1 à 1:10 à une température de 90 à 400°C et une pression de 0,1 à 15 x 10⁶ Pa dans un tube à écoulement, le corps de remplissage contenant un catalyseur acide de Brönsted choisi parmi des corps de remplissage de β-zéolithe, silicate en feuilles ou dioxyde de titane, et un corps de remplissage métallique, le corps de remplissage de catalyseur acide de Brönsted choisi parmi des corps de remplissage de β-zéolithe, silicate en feuilles ou dioxyde de titane, et le corps de remplissage métallique, étant disposés en couches alternées dans le tube à écoulement, avec obtention d'un mélange réactionnel,
(2) Réaction subséquente du mélange réactionnel à une température de 150 à 400°C et une pression inférieure à la pression de l'étape 1, la température et la pression étant choisies de manière que l'on obtienne une première phase gazeuse et une première phase liquide ou une première phase solide, ou un mélange de première phase gazeuse et de première phase liquide ou solide, et la première phase gazeuse étant séparée de la première phase liquide ou de la première phase solide ou du mélange de première phase liquide et de première phase solide, et
(3) Mélange de la première phase liquide ou de la première phase solide ou du mélange de première phase liquide et de première phase solide avec une phase gazeuse ou une phase liquide, contenant de l'eau, à une température de 150 à 370°C et une pression de 0,1 à 30 x 10⁶ Pa, avec obtention d'un mélange de produits.

2. Procédé selon la revendication 1, **caractérisé en ce que** l'étape (3) est entreprise dans un tube à écoulement, que le corps de remplissage contient un catalyseur acide de Brönsted choisi parmi des corps de remplissage de β-zéolithe, silicate en feuilles ou dioxyde de titane, et un corps de remplissage métallique, le corps de remplissage de catalyseur acide de Brönsted choisi parmi des corps de remplissage de β-zéolithe, silicate en feuilles ou dioxyde de titane, et le corps de remplissage métallique, étant disposés en couches alternées dans le tube à écoulement

3. Procédé selon la revendication 1 ou 2, comprenant en plus l'étape suivante:
(4) Post-condensation du mélange de produits à une température de 200 à 350°C et une pression inférieure à la pression de l'étape 3, la température et la pression étant choisies de manière que l'on obtienne une deuxième phase gazeuse contenant de l'eau et de l'ammoniac et une deuxième phase liquide ou une deuxième phase solide ou un mélange de deuxième phase liquide et de deuxième phase solide, contenant à chaque fois du polyamide.

4. Procédé continu pour la préparation d'un polyamide par réaction d'au moins un aminonitrile avec de l'eau, comprenant les étapes suivantes:
(1) Réaction d'au moins un aminonitrile avec de l'eau en proportion molaire de 1:1 à 1:10 à une température de 90 à 400°C et une pression de 0,1 à 15 x 10⁶ Pa dans un tube à écoulement, le corps de remplissage contenant un catalyseur acide de Brönsted choisi parmi des corps de remplissage de β-zéolithe, silicate en feuilles ou dioxyde de titane, et un corps de remplissage métallique, les corps de remplissage de catalyseur acide de Brônsted choisi parmi des corps de remplissage de β-zéolithe, silicate en feuilles ou dioxyde de titane, et le corps de remplissage métallique, étant disposés en couches alternées dans le tube à écoulement, avec obtention d'un mélange réactionnel,
(2) Réaction subséquente du mélange réactionnel à une température de 150 à 400°C et une pression inférieure à la pression de l'étape 1, la température et la pression étant choisies de manière que l'on obtienne une première phase gazeuse et une première phase liquide ou une première phase solide, ou un mélange de première phase gazeuse et de première phase liquide ou solide, et la première phase gazeuse étant séparée de la première phase liquide ou de la première phase solide ou du mélange de première phase liquide et de première phase solide, et
(4) Post-condensation de la première phase liquide ou de la première phase solide, ou du mélange de première phase liquide et de première phase solide à une température de 200 à 350°C et une pression inférieure à la pression de l'étape 2, la température et la pression étant choisies de manière que l'on obtienne une deuxième phase gazeuse contenant de l'eau et de l'ammoniac et une deuxième phase liquide ou une deuxième phase solide ou un mélange de deuxième phase liquide et de deuxième phase solide, contenant à chaque fois du polyamide.

5. Procédé selon l'une des revendications 1 à 4, où dans l'étape 1 ou l'étape 3, ou bien dans l'étape 1 et dans l'étape 3, la température et la pression sont choisies de manière que l'on obtienne une phase liquide ou une phase solide, ou un mélange de phase liquide et de phase solide, et une phase gazeuse, et où l'on sépare la phase gazeuse.

6. Procédé selon l'une des revendications 1 à 5, où le corps de remplissage de dioxyde de titane consiste en TiO₂ avec 70 à 100% en poids d'anatase et 0 à 30% de rutile, dans lequel jusqu'à 40% en poids du dioxyde de titane peuvent être remplacés par de l'oxyde de tungstène.

7. Procédé selon l'une des revendications 1 à 6, où au moins l'une des phases gazeuses obtenues dans les étapes respectives est recyclée dans au moins une des étapes précédentes.

8. Procédé selon l'une des revendications 1 à 7, où l'on fait réagir, comme aminonitrile, un ω-aminoalkylnitrile avec un radical alkylène (-CH₂-) comportant de 4 à 12 atomes de carbone ou un aminoalkyarylnitrile comportant de 8 à 13 atomes de carbone.

9. Procédé selon l'une des revendications 1 à 8, o* l'on met en oeuvre le mélange suivant:
de 50 à 99,99% en poids de 6-aminocapronitrile,
de 0,01 à 50% en poids d'au moins un acide dicarboxylique, choisi dans le groupe formé par des acides α,ω-dicarboxyliques aliphatiques en C₄ à C₁₀, des acides dicarboxyliques aromatiques en C₈ à C₁₂ et des acides cycloalcane-dicarboxyliques en C₅ à C₈,
de 0 à 50% en poids d'une α,ω-diamine comportant de 4 à 10 atomes de carbone,
de 0 à 50% en poids d'un α,ω-dinitrile en C₂ à C₁₂, ainsi que
de 0 à 50% en poids d'un α,ω-aminoacide en C₅ à C₁₂ ou du lactame correspondant,
de 0 à 10% en poids d'au moins un acide inorganique ou de ses sels,
la somme des pourcentages en poids totalisant 100%.
